# EUROPEAN PATENT SPECIFICATION

(11) **EP 1 929 640 B1**
(45) Date of publication and mention of the grant of the patent: **01.06.2011**
(21) Application number: 05821419.8
(22) Date of filing: 02.12.2005
(51) Int. Cl.: H04M 1/02, H04B 1/38

(54) **SLIDE TYPE MOBILE TERMINAL**
MOBILES ENDGERÄT DES SCHIEBETYPS
TERMINAL MOBILE DE TYPE COULISSANT

(30) Priority: 01.09.2005 KR 20050081343
(43) Date of publication of application: 11.06.2008
(73) Proprietor: KT TECH, INC., Gyeonggi-do 463-769 (KR)
(72) Inventor: KIM, Yong-Jae, Gyeonggi-do 463-769 (KR); LEE, Ul-Ho, Gyeonggi-do 463-769 (KR)
(74) Representative: Strehl Schübel-Hopf & Partner
(86) International application number: PCT/KR2005/004092
(87) International publication number: WO 2007/026980

(56) References cited:
- EP-A2- 1 515 525
- KR-A- 20050 007 842
- KR-A- 20050 024 075
- US-A1- 2004 204 202
- US-A1- 2004 248 621

## Description

### Technical Field

This document relates to slide type mobile terminal.

### Background Art

As wireless communication technology is developed, it is applied to various goods and gives convenience to manifold aspects. Such wireless communication technology is employed to the phone, so that users can carry and make use of it anywhere. Generally, mobile terminal is comprehensive concept involving a transmitter-receiver of household wireless phone and a cellular phone which is widely used.

The mobile terminal can be classified into flip type, folder type and slide type according to shape or using method. The slide type mobile terminal put one slide part on top of another, and a display and buttons formed on each slide part are directed to same direction. Generally, the slide type mobile terminal can slide the forward slide part relatively to disclose display or buttons hidden by it. In one example, there is a mobile terminal which can slide the forward sliding part and disclose buttons formed on the backward slide part. In another example, there is a mobile terminal which can slide downwardly the forward slide part having buttons and disclose the display formed on backward slide part. Such slide type terminal is widely used due to the convenience to open the display part.

As a camera or a camcoder is equipped with mobile terminal such as cellular phone, PDA, there are demands for mobile terminal having a bigger display. Especially, in case that the display of the mobile terminal which can show digital multimedia broadcasting should be used for a long time, such demands are increased.

US 2004/0248621 A1 discloses an electronic device comprising a touch sensitive screen, and a partially transparent cover member covering the screen and having protruding keys.

KR 2005 000 7842 A discloses a slide type portable terminal having a display unit enabled to slide down along a body unit in 2-step method, so that the display unit can expose only one portion of the body unit when necessary or can expose entire parts of the body unit.

### Disclosure of Invention

### Technical Problem

The present invention provides slide type mobile terminal which can have bigger display and convenience of operation.

The present invention also provides slide type mobile terminal which can have various functional buttons.

### Technical Solution

In one aspect, the invention features a slide type mobile terminal which comprising a body part having buttons, a slide part having a display, the slide part having push protrusions which correspond to the buttons when the slide part covers it, the slide part and the body part are combined by connecting mean which allows slide of the slide part to the respect to the body part.

Embodiments may include one or more of the following features. For example,

the buttons may have different functions when the slide part covers the buttons and when the slide part disclose the buttons. The push protrusions may be disposed along or perpendicularly to the moving direction of the slide part.

The connecting mean may be comprise a slide groove formed on one of the body part or the slide part, and a slide guide formed on the other of the body part or the slide part and inserted to the slide groove. The connecting mean may be comprise a first hinge part connecting to one of the body part or the slide part, a second hinge part connecting to the other of the body part or the slide part and is inserted to the first hinge part slidably.

The first hinge part may be connected to the slide part and the second hinge part may be connected to the body part, And the push protrusions may be disposed on the first hinge part.

### Brief Description of the Drawings

The accompanying drawings, which are incorporated in and constitute a part of the specification, illustrate embodiments of the invention, and together with the general description given above and the detailed description of the embodiment given below, serve to explain the principles of the invention.

Fig. 1 is an exploded perspective view of a mobile terminal according to one embodiment of the present invention.

Fig. 2 is a front view of a mobile terminal depicted in Fig. 1, which illustrating pressed buttons by the movement of the slide part.

Fig. 3 is an exploded perspective view of a mobile terminal according to another embodiment of the present invention.

Fig. 4 is a front view of a mobile terminal depicted in Fig. 3, which illustrating pressed buttons by the movement of the slide part.

Fig. 5 is a plane view illustrating push protrusions according to still another embodiment of the present invention.

Fig. 6 is an exploded perspective view of a mobile terminal according to still another embodiment of the present invention.

Fig. 7 is front view of a mobile terminal which illustrating the operation of the mobile terminal depicted in Fig. 6.

### Best Mode for Carrying Out the Invention

Hereinafter, embodiments of the invention will be described in more detail, where in the description with reference to the accompanying drawings those components are rendered the same reference number that are the same or are in correspondence regardless of the Figure number, and redundant explanations are omitted.

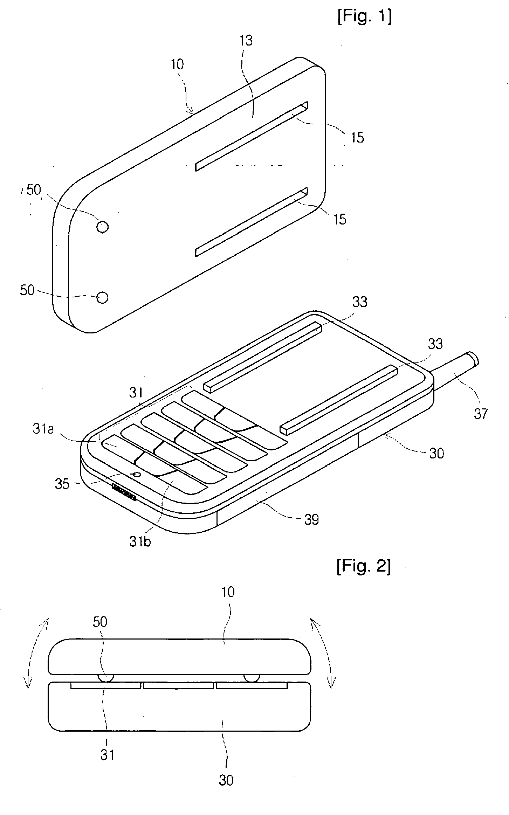

Fig. 1 is an exploded perspective view of a mobile terminal according to one embodiment of the present invention.

One embodiment of the present invention, as illustrated in Fig. 1, comprises a slide part (10) having a display (not illustrated), a body part (30) having buttons (31) and connected to the slide part (10), and push protrusions (50) formed on the lower surface of the slide part (10).

On one surface of the slide part (10) is formed a display (11) and the other surface of it are formed push protrusions (50) and slide grooves (15). The slide part (10) is connected slidably to the upper surface of the body part (30) and can move for some distance by the slide groove (15) and slide guides (33).

The slide guides (33) are inserted to the slide grooves (15). The slide guides (33) and the slide grooves (15) allow the slide part (10) to slide. Accordingly, the slide part (10) can move up and down so that can disclose or cover the buttons (31). The slide grooves (15) can be formed on one surface of the body part (30), and the slide guide (33) can be formed on the slide part (10). The slide groove (15) and the slide guide (33) are formed from plastic resin or light metals, so the elasticity of the plastic resin or the light metals allows the movement of the slide part (10).

Additionally, if the movement of the slide part (10) is designed to the extend that the buttons (31) can be pressed, the push protrusions (50) can press the buttons (31) and they functions. Buttons (31) of a common mobile terminal can function by the 0.5mm depth push. Consequently, the slide groove (15) and the slide guide (33) can provide movement of the slide part (10) with respect to the body part (30) without additional construction, so that the function of the buttons (31) can be implemented by the push protrusions (50).

As illustrated in Fig. 2, the push protrusions (50) are formed on lower surface of the slide part (10) and presses or are positioned on the buttons (31) when the slide part (10) is closed. When the push protrusions (50) are pressed in the state of the slide part (10) is closed, they can rotate by the movement of the slide part (10) and press the buttons (31), so that the functions of the buttons (31) are implemented. The push protrusions (50) are formed from the plastic resin. And it is preferable to form the push protrusions (50) same or less than the size of the buttons (31).

If some portion of the slide part (10) are pressed in a state of the slide part (10) is closed, the push protrusions (50) perform the role of function keys which disposed on the surface of the slide part (10). As a result, it is possible to make a bigger display on the surface of the slide part (10). Furthermore, it becomes convenient to use the mobile terminal because some functions of the terminal can be performed by the mere push of the slide part (10) in the state of grasp of it.

On front surface of the body part (30) there are buttons (31) disclosed to the outside when the slide part (10) is slid upwardly and slide guides (33). And the mobile terminal has antenna (37) and battery (39).

The buttons (31) can be pressed by the push protrusions (50) when the slide part (10) covers the buttons (31), namely the body part (30) is closed by the slide part (10). Each of the buttons (31) can have two different functions when the slide part (10) is opened or closed to the body part (30). For example, the button (31 a) can perform # when the slide part (10) is opened and perform play of movie when the slide part (10) is closed.

The slide guide (33) are formed on the upper surface of the body part (30) and inserted to the slide grooves (13) to allow the movement of the slide part (10) up and down. And the slide guides (33) are connected to the slide grooves (15) and make possible the movement of the slide part (10).

Fig. 2 is a front view of a mobile terminal depicted in Fig. 1, which illustrating pressed buttons by the movement of the slide part.

As illustrated in Fig. 2, the push protrusions (50) are positioned on or over the buttons (31) when the slide part (10) is closed. And if the left or the right lower portion of the slide part (10) is pressed, the slide part (10) can rotate and press the buttons (31) by the movement provided by the slide guides (33) and the slide grooves (15).

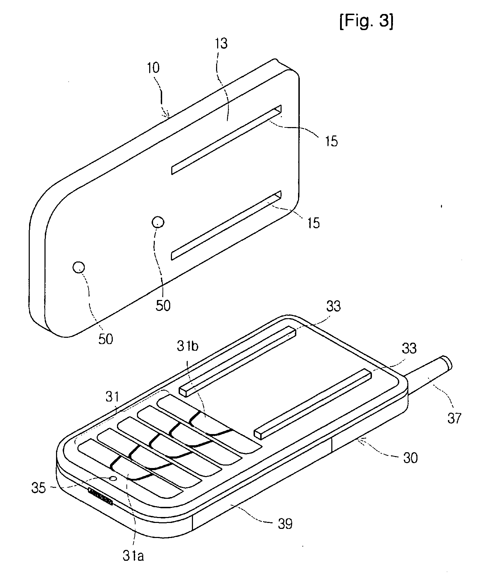

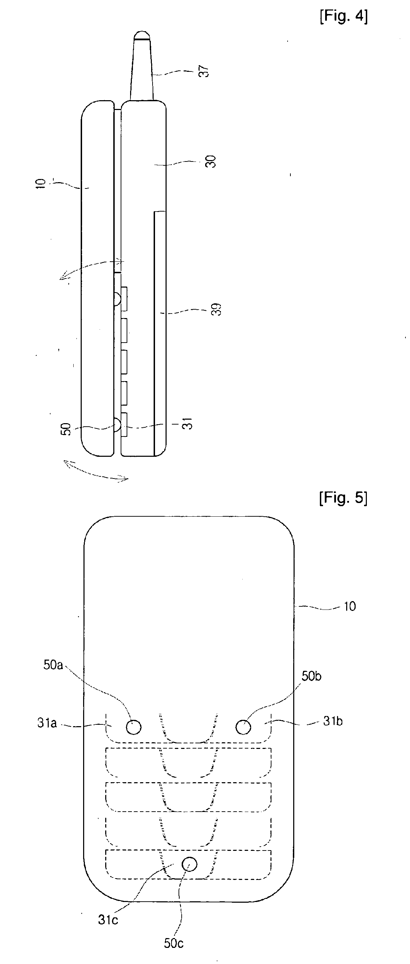

Fig. 3 is an exploded perspective view of a mobile terminal according to another embodiment of the present invention which illustrates the push protrusions (50) are disposed along the moving direction of the slide part (10). And Fig. 4 is a front view of a mobile terminal depicted in Fig. 3, which illustrating pressed buttons by the movement of the slide part (10).

Because the slide grooves (15) and the slide guides (33) are formed along the moving direction, namely the sliding direction of the slide part (10), the movement of the slide part (10) becomes bigger when the slide part (10) rotates along the moving direction as illustrated in Fig. 4. Accordingly, as illustrated in Fig. 4, if the lower or middle portion of the slide part (10) is pressed, the push protrusions (50) press the buttons (31), which perform different function.

Fig. 5 is a plane view illustrating the arrangement of push protrusions according to still another embodiment of the present invention.

As illustrated in Fig. 5, the push protrusions (50) can be disposed on lower surface of the slide part (10) by triangular form. If the lower portion of the slide part (10) is pressed, the push protrusion (50c) presses the button (31c) and function A is performed. And if the left of the middle portion of the slide part (10) is pressed, the push protrusion (50a) presses the button (31a) and function B is performed. And if the right of the middle portion of the slide part (10) is pressed, the push protrusion (50b) presses the button (31b) and function C is performed. Additionally, if the center of the three push protrusions (50a, 50b, 50c) is pressed, they press the three buttons (31a, 31 b, 31 c) instantaneously and function D is performed.

The function A, B, C, and D is, for instance, the play, stop, forward or backward of movies and reception of the multimedia broadcasting, and is not limited to that function. As stated above, the push protrusions (50) of the mobile terminal according the one embodiment of the present invention perform a role of additional function key. Consequently, it is possible to make a bigger display and to have various function keys. Moreover, the operation of the terminal becomes convenient because various functions are performed by the mere press of the slide part (10) in a state of grasp of it. Although the push protrusions (50) and the buttons (31) are disposed by triangular form as illustrated in Fig. 5, the present invention is not limited to that structure and various arrangements of the push protrusions are possible. For example, the push protrusions can be arranged by lozenge or rectangular form.

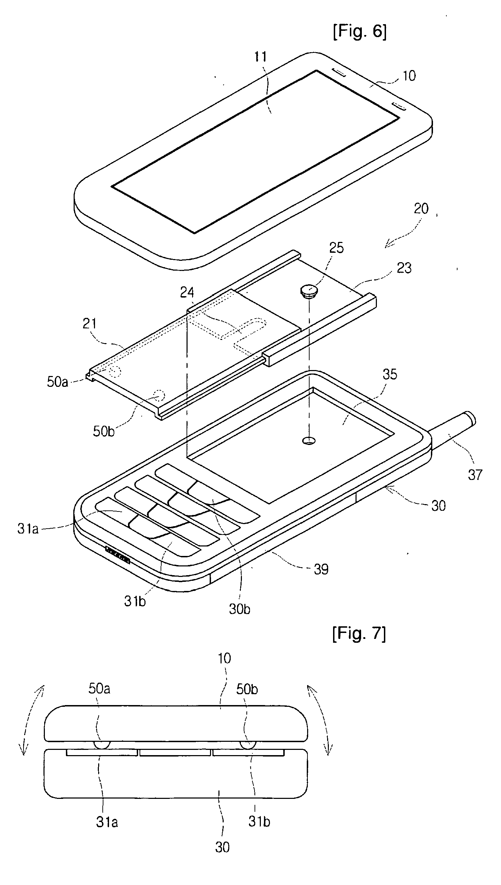

Fig. 6 is an exploded perspective view of a mobile terminal according to still another embodiment of the present invention. The slide part (10) and the body part (30) of the mobile terminal illustrated in Fig. 6 are connected by a slide hinge (20).

The slide hinge (20) comprises a first hinge part (21) fixed to the slide part (10) and a second hinge part (23) into which both ends of the first hinge part (21) are inserted slidably. The second hinge part (23) is fixed to the body part (30) by the locking pin (25).

The first hinge part (21) is fixed on the lower surface of the slide part(10) and slides up and down along the second hinge part (23) with the slide part (10). Some portion of the first hinge part (21) is positioned over the buttons (31) when the slide part (10) is closed. And push protrusions (50) are formed on the lower surface of the first hinge part (21)(shown in dotted line).

The second hinge part (23) to which the first hinge part (21) is inserted guides the sliding movement of the first hinge part (21). The second hinge part (23) is positioned and fixed by locking pin (25) to the body groove (35) which is formed in the body part (30).

The locking pin (25) fixes the second hinge part (23) to the body part (30). And the locking pin (25) allows the movement of the slide part (10) with respect to the body part (30). The locking pin (25) is formed from metal or plastic having elasticity which make possible the movement of the slide part (10). Additionally, the gaps between the locking pin (25) and the body part (30) or the second hinge part (23) allow the movement of the slide part (10).

Each of the push protrusions (50a, 50b) is positioned over the buttons (31a, 31b) respectively when the slide part (10) is closed to the body part (30). When the slide part (10) is slid upwardly, the push protrusions (50a, 50b) are moved near the second hinge part (23) but doesn t contact to it.

Fig. 7 is front view of a mobile terminal which illustrating the operation of the mobile terminal depicted in Fig. 6. Referring to the Fig. 7, the slide part (10) is combined to the body part (30) by the first hinge part (21) and the second hinge part (23).

As illustrated in Fig. 6 and Fig. 7, pressing the left of the lower portion of the slide part (10) causes the movement of the slide part (10) by the elasticity of the locking pin (25) and the push protrusion (50a) presses the button (31 a). And the right of the lower portion of the slide part (10) is pressed, the push protrusion (50b) presses the button (30b). The push protrusions (50a, 50b) can be arranged perpendicular to the moving direction of the slide part (10) as illustrated in Fig. 1 or triangular form in Fig. 5.

### Industrial Applicability

The present invention can provide slide type mobile terminal which have bigger display and convenience of operation.

The present invention can also provide slide type mobile terminal which have various functional buttons.

## Claims

1. A slide type mobile terminal comprising,
a body part (30) having buttons (31);
a slide part (10) having a display;
**characterized in that**
the slide part (10) has push protrusions (50) which are positioned an or over the buttons and adapted to press the buttons (31) when the slide part (10) is closed,
the slide part (10) and the body part (30) are combined by a connecting means which allows slide of the slide part (10) with respect to the body part (30).

2. The slide type mobile terminal according to claim 1,
wherein the buttons (31) have different functions when the slide part (10) covers the buttons (31) and when the slide part (10) disclose the buttons (31).

3. The slide type mobile terminal according to claim 1,
wherein the push protrusions (50) are disposed along the moving direction of the slide part (10).

4. The slide type mobile terminal according to claim 1,
wherein the push protrusions (50) are disposed perpendicularly to the moving direction of the slide part (10).

5. The slide type mobile terminal according to claim 1,
wherein the connecting means comprises
a slide groove (13) formed on one of the body part (30) or the slide part (10),
and a slide guide (33) formed on the other of the body part (30) or the slide part (10) and inserted to the slide groove (13).

6. The slide type mobile terminal according to claim 1,
wherein the connecting means comprises a first hinge part (21) connecting to one of the body part (30) or the slide part (10), a second hinge part (23) connecting to the other of the body part (30) or the slide part (10) and inserted to the first hinge part (21) slidably.

7. The slide type mobile terminal according to claim 6,
wherein the first hinge part (21) is connected to the slide part (10) and the second hinge part (23) is connected to the body part (30), and
the push protrusions (50) are disposed on the first hinge part (21).

## Patentansprüche

1. Mobiles Endgerät vom Schiebetyp, umfassend,
ein Körperelement (30) mit Tasten (31);
ein Schiebeelement (10) mit einer Anzeige;
**dadurch gekennzeichnet, dass**
das Schiebeelement (10) Drückvorsprünge (50) aufweist, die sich auf oder über den Tasten befinden und zum Drücken der Tasten (31) ausgelegt sind, wenn das Schiebeelement (10) geschlossen ist,
wobei das Schiebeelement (10) und das Körperelement (30) mittels einer Verbindung verbunden sind, welche es ermöglicht, dass das Schiebeelement (10) bezüglich des Körperelements (30) verschoben wird.

2. Mobiles Endgerät vom Schiebetyp nach Anspruch 1,
wobei die Knöpfe (31) verschiedene Funktionen haben, wenn das Schiebeelement (10) die Tasten (31) bedeckt, und wenn das Schiebeelement (10) die Tasten (31) nicht bedeckt.

3. Mobiles Endgerät vom Schiebetyp nach Anspruch 1,
wobei sich die Drückvorsprünge (50) entlang der Bewegungsrichtung des Schiebeelements (10) befinden.

4. Mobiles Endgerät vom Schiebetyp nach Anspruch 1,
wobei sich die Drückvorsprünge (50) senkrecht zur Bewegungsrichtung des Schiebeelements (10) befinden.

5. Mobiles Endgerät vom Schiebetyp nach Anspruch 1,
wobei die Verbindung umfasst:
eine Schiebenut (13), die auf dem Körperelement (30) oder dem Schiebeelement (10) ausgebildet ist,
und eine Schiebeführung (33) die auf dem jeweils anderen des Körperelements (30) oder des Schiebeelements (10) ausgebildet ist und in die Schiebenut (13) eingeführt ist.

6. Mobiles Endgerät vom Schiebetyp nach Anspruch 1,
wobei die Verbindung umfasst:
ein erstes Gelenkteil (21), welches mit dem Körperelement (30) oder dem Schiebeelement (10) verbunden ist,
ein zweites Schiebeelement (23), welches mit dem jeweils anderen des Körperelements (30) oder des Schiebeelements (10) verbunden ist und verschiebbar in das erste Gelenkteil (21) eingeführt ist.

7. Mobiles Endgerät vom Schiebetyp nach Anspruch 6,
wobei das erste Gelenkteil (21) mit dem Schiebeelement (10) verbunden ist und das zweite Gelenkteil (23) mit dem Körperelement (30) verbunden ist, und
die Drückvorsprünge (50) sich auf dem ersten Gelenkteil (21) befinden.

## Revendications

1. Terminal mobile du type coulissant comprenant,
une partie de corps (30) comportant des boutons (31) ;
une partie coulissante (10) comportant un affichage ; **caractérisé en ce que**
la partie coulissante (10) a des saillies de poussée (50) qui sont positionnées sur ou au-dessus des boutons (31) et adaptées pour presser les boutons quand la partie coulissante (10) est fermée,
la partie coulissante (10) et la partie de corps (30) sont combinées par des moyens de connexion qui permettent le coulissement de la partie coulissante (10) par rapport à la partie de corps (30).

2. Terminal mobile du type coulissant selon la revendication 1, dans lequel les boutons (31) ont différentes fonctions quand la partie coulissante (10) couvre les boutons (31) et quand la partie coulissante (10) laisse apparaitre les boutons (31).

3. Terminal mobile du type coulissant selon la revendication 1, dans lequel les saillies de poussée (50) sont disposées le long de la direction de déplacement de la partie coulissante (10).

4. Terminal mobile du type coulissant selon la revendication 1, dans lequel les saillies de poussée (50) sont disposées perpendiculairement à la direction de déplacement de la partie coulissante (10).

5. Terminal mobile du type coulissant selon la revendication 1,
dans lequel les moyens de connexion comprennent
une rainure de coulissement (13) formée sur l'une de la partie de corps (30) et de la partie coulissante (10),
et un guide de coulissement (33) formé sur l'autre de la partie de corps (30) et de la partie coulissante (10) et inséré dans la rainure de coulissement (13).

6. Terminal mobile du type coulissant selon la revendication 1,
dans lequel les moyens de connexion comprennent
une première partie d'articulation (21) connectée à l'une de la partie de corps (30) ou la partie coulissante (10) ;
une seconde partie d'articulation (23) connectée à l'autre de la partie de corps (30) ou la partie coulissante (10) et insérée dans la première partie d'articulation (21) de manière coulissante.

7. Terminal mobile du type coulissant selon la revendication 6,
dans lequel la première partie d'articulation (21) est connectée à la partie coulissante (10) et la seconde partie d'articulation (23) est connectée à la partie de corps (30), et
les saillies de poussée (50) sont disposées sur la première partie d'articulation (21).
